# EUROPEAN PATENT APPLICATION

(11) **EP 2 653 966 A2**
(43) Date of publication of application: **23.10.2013**
(21) Application number: 13164258.9
(22) Date of filing: 18.04.2013
(51) Int. Cl.: G06F 9/44, G06F 3/0488

(54) **Display controlling apparatus**

(30) Priority: 20.04.2012 JP 2012096609; 26.02.2013 JP 2013035438
(71) Applicant: Ricoh Company, Ltd., Tokyo 143-8555 (JP)
(72) Inventor: Kemmochi, Eiji, Tokyo, 143-8555 (JP); Tsukuda, Tomoyuki, Tokyo, 143-8555 (JP)
(74) Representative: Schwabe - Sandmair - Marx

(57) **Abstract**

A display controlling apparatus includes: a state information initializing section to initialize state information of an application to be displayed for a user; a state information registering section to receive an operation event triggered by an operation of the user for registering a record of the state information into a database to be displayed corresponding to the received operation event; a state information display controlling section to monitor the record of the state information registered in the database for determining the record of the state information to be displayed; and a state information displaying section to display the determined record of the state information on a display screen. The display controlling apparatus has at least one record of the state information to be displayed on the display screen at a predetermined timing.

## Description

### BACKGROUND OF THE INVENTION

### 1. Field of the Invention

The disclosures herein generally relate to a display controlling apparatus used in an electronic information board or the like.

### 2. Description of the Related Art

An electronic information board product is available on the market that has a large (for example, 40 to 60 inches) flat panel display such as an LCD, a plasma display or a projector, and a touch panel.

By connecting with a PC (personal computer), this kind of product can enlarge a display screen of the PC, which is used for a presentation at a meeting, a lecture, or the like at a company, an administrative office, or an educational institution.

Such a product offers a touch panel function that enables a user to operate a PC by touching the displayed screen instead of using a mouse.

In addition, electronic blackboard application software running on the connected PC is offered with such a product.

The electronic blackboard application software provides a screen used as a blackboard and a handwriting function via a touch panel, with which a user can handwrite characters or the like via the touch panel, or superpose handwritings with a screen image of the connected PC.

Using such an electronic information board with the handwriting function at a meeting in an office, it is possible to display a presentation material on which handwritings are added via the screen at any time. Moreover, the screen image with the handwritings can be recorded if needed so that the screen image may be reviewed or summarized efficiently at the end of the meeting.

There are two important features of such an electronic information board when used in a meeting or the like. First, handwriting information can be input as required while other necessary information is simultaneously displayed with running a PC application other than the electronic blackboard application; second, the displayed and input information can be thoroughly recorded.

The latter feature, the thorough recording of meeting information, is especially important from the view point of utilizing the result of a meeting at the next process in business. To avoid an omission of information that should be recorded, such an electronic information board provides two modes when inputting via a screen: PC application operation/display mode to input PC application operations; and handwriting input/record mode to input handwriting information (see, for example, Japanese Laid-open Patent Application No. 2005-092538). A selection of the modes is explicitly specified by a user, which makes it possible to avoid an omission of information that should be recorded.

However, the multiple modes including the PC application operation/display mode and the handwriting input/record mode in a conventional electronic information board have problems. A user may forget which mode the user is currently using after having selected and used a mode for a certain period of time, which may make the user input handwriting in the PC application operation/display mode, or input a PC application operation in the handwriting input/record mode. This kind of mistake may result in a malfunction or an error that reduces productivity.

### SUMMARY OF THE INVENTION

It is a general object of at least one embodiment of the present invention to provide a display controlling apparatus that substantially obviates one or more problems caused by the limitations and disadvantages of the related art. Specifically, it may be desirable to provide a display controlling apparatus used in an electronic information board or the like that enables a user to avoid an operational mistake when there are multiple modes of operations.

According to at least one embodiment of the present invention, a display controlling apparatus includes: a state information initializing section to initialize state information of an application to be displayed for a user; a state information registering section to receive an operation event triggered by an operation of the user for registering a record of the state information into a database to be displayed corresponding to the received operation event; a state information display controlling section to monitor the record of the state information registered in the database for determining the record of the state information to be displayed; and a state information displaying section to display the determined record of the state information on a display screen. The display controlling apparatus has at least one record of the state information to be displayed on the display screen at a predetermined timing.

According to at least one embodiment of the present invention, it is possible to provide a display controlling apparatus used in an electronic information board or the like that displays a currently selected mode at a predetermined timing so that a user can avoid an operational mistake induced by a mode recognition mistake.

### BRIEF DESCRIPTION OF THE DRAWINGS

Other objects and further features of embodiments will be apparent from the following detailed description when read in conjunction with the accompanying drawings, in which:
FIG. 1 is an external view of a display system according to an embodiment of the present invention;
FIG. 2 is a schematic view illustrating a connection between a display and a touch panel of a display device, and a PC;
FIG. 3 is a hardware configuration diagram of the display system;
FIG. 4 is a software configuration diagram of the display system;
FIG. 5 is a schematic view illustrating an example of data structure of a state information database;
FIG. 6 is a schematic view illustrating an application screen;
FIG. 7 is a schematic view illustrating a window layer configuration of the application screen;
FIG. 8 is a flowchart of an initial setting function and an operation event obtaining function;
FIG. 9 is a schematic view illustrating the application screen at an initial state;
FIG. 10 is a flowchart of a handwriting input function;
FIG. 11 is a flowchart of a delete mode function;
FIG. 12 is a flowchart of an edit mode function;
FIG. 13 is a flowchart of a pen color changing function;
FIG. 14 is a flowchart of a pen thickness changing function;
FIG. 15 is a flowchart for a new screen function;
FIG. 16 is a flowchart of a recording screen switching function;
FIG. 17 is a flowchart of a PC application start-up function;
FIG. 18 is a flowchart of a PC application operation function;
FIG. 19 is a flowchart of a recording screen saving function;
FIG. 20 is a flowchart of a state information initializing function;
FIG. 21 is a schematic view illustrating a state information database after initialization;
FIG. 22 is a flowchart of a state information registering function;
FIGS. 23A-23C are schematic views illustrating example states of the state information database;
FIG. 24 is a flowchart of a state information display controlling function;
FIG. 25 is a flowchart of a state information display function; and
FIGS. 26A-26B are schematic views illustrating application screens without and with a state information window.

### DESCRIPTION OF THE PREFERRED EMBODIMENTS

In the following, embodiments of the present invention will be described with reference to the accompanying drawings.

### <System configuration>

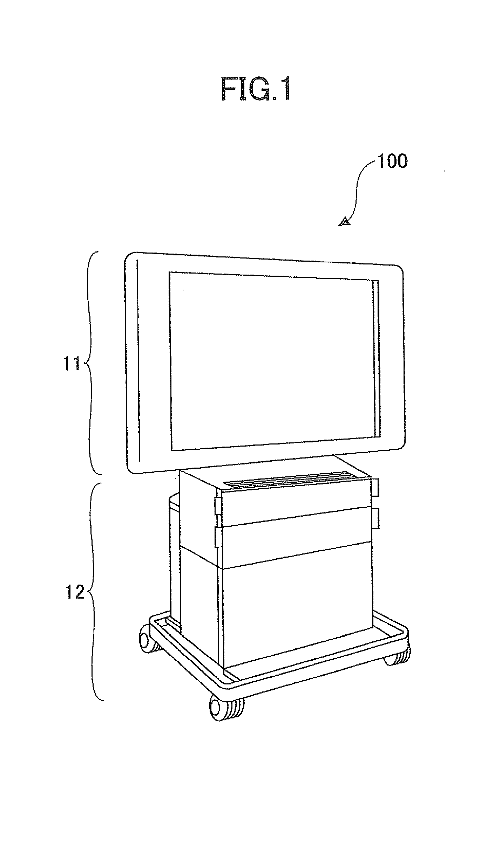

FIG. 1 is an external view of a display system according to an embodiment of the present invention.

As shown in FIG. 1, a display system 100 includes a display device 11 and a rack 12. The display device 11 includes a display for displaying a desktop screen of a connected PC and handwriting data, and a touch panel to input handwriting data and to operate a PC application directly on the screen. The display is configured with a flat panel display such as an LCD, a plasma display, or a projector. The rack 12 carries a dedicated PC connected to the display device 11 to input/output information, a video device, a printer, etc.

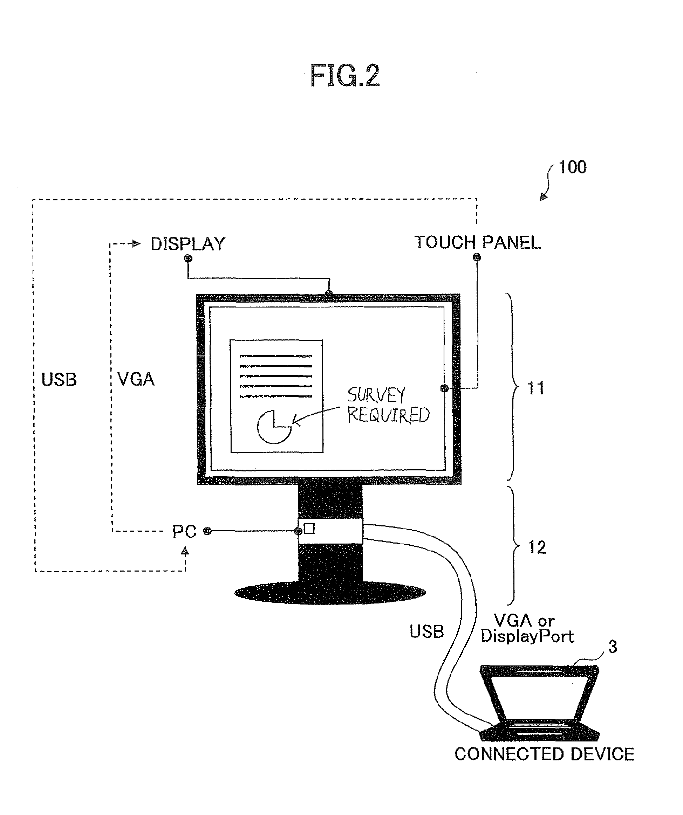

FIG. 2 is a schematic view illustrating a connection between the display/touch panel and the PC.

As shown in FIG. 2, the PC and the display are connected by a VGA (Video Graphics Array) cable or the like, and the touch panel and the PC are connected by a USB (Universal Serial Bus) cable or the like.

In addition, by connecting a connected device 3 with the PC by VGA or a DisplayPort interface via a USB cable, it is possible to display an image in the connected device 3 on the display of the display device 11 to operate the connected device 3 via the touch panel.

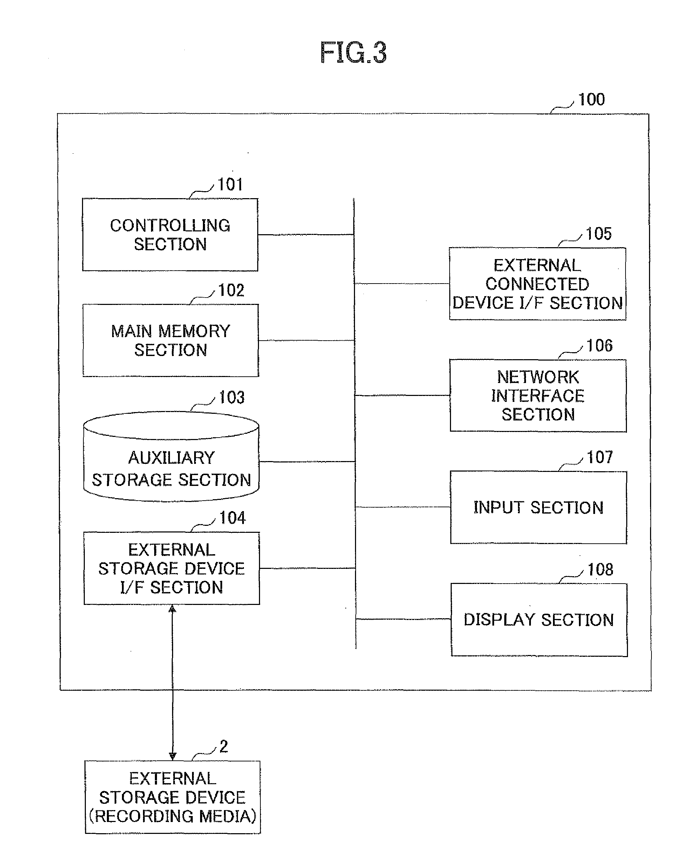

FIG. 3 is a hardware configuration diagram of the display system 100.

As shown in FIG. 3, the display system 100 includes a controlling section 101, a main memory section 102, an auxiliary storage section 103, an external storage device I/F (interface) section 104, an external connected device I/F section 105, a network I/F section 106, an input section 107, and a display section 108. The controlling section 101, the main memory section 102, the auxiliary storage 103, the external storage device I/F section 104, the external connected device I/F section 105, the network I/F section 106 are implemented mainly in the PC connected with the display device 11. The input section 107 corresponds to a mouse and a keyboard of the PC, and the touch panel of the display device 11. The display section 108 corresponds to the display of the display device 11.

The controlling section 101 executes a program stored in the main memory section 102, to receive, calculate, process and output data.

The main memory section 102 is a ROM (Read-Only Memory), a RAM (Random Access Memory) or the like to store or temporarily hold data and programs such as an OS, which is basic software, or application software executed by the controlling section 101.

The auxiliary storage 103 is an HDD (Hard Disk Drive) or the like to store data and the programs including the OS or the application software.

The external storage device I/F section 104 inputs/outputs data and the program with an external storage device 2 (for example, a USB memory or a CD - RQM). A program installed on the external storage device 2 is installed in the auxiliary storage section 103 via the external storage device I/F section 104.

The external connected device I/F section 105 provides physical interfaces such as a VGA input connector or a USB port to connect information processing devices (not shown), for example, a PC or a printer.

The network I/F section 106 provides network interfaces with information processing devices (not shown), for example, a PC or a server, via a LAN (Local Area Network) or a WAN (Wide Area Network) configured with wired or wireless data transmission paths.

The input section 107 and the display section 108 are as described above.

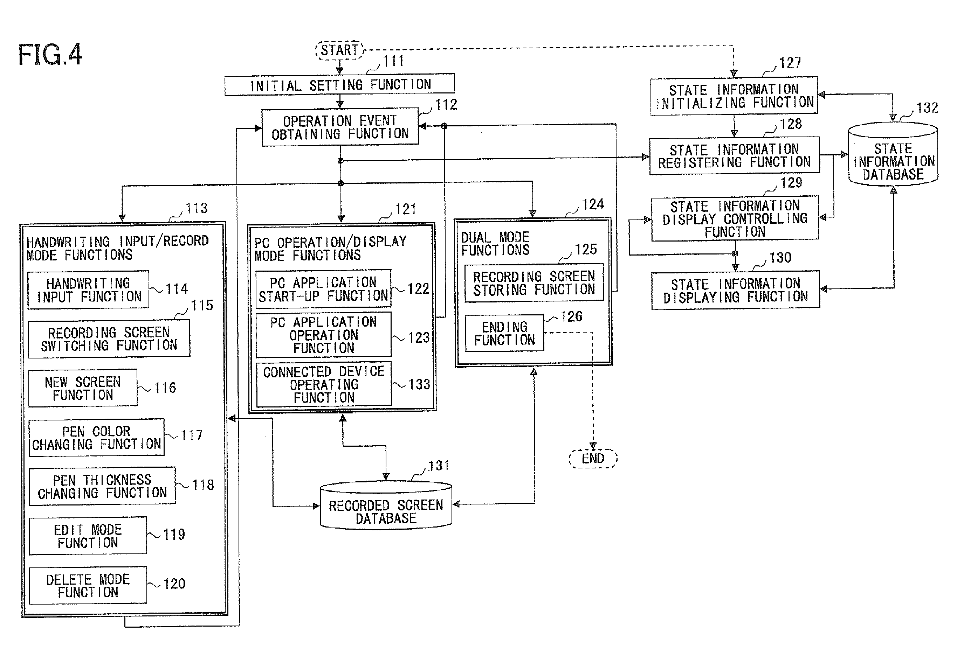

FIG. 4 is a software configuration diagram of the display system 100.

The display system 100 includes an electronic information board application that has the following functional sections, as shown in FIG. 4: an initial setting function 111, an operation event obtaining function 112, handwriting input/record mode functions 113, PC operation/display mode functions 121, dual mode functions 124, a state information initializing function 127, a state information registering function 128, a state information display controlling function 129, and a state information displaying function 130. The handwriting input/record mode functions 113 include a handwriting input function 114, a recording screen switching function 115, a new screen function 116, a pen color changing function 117, a pen thickness changing function 118, an edit mode function 119, and a delete mode function 120. The PC operation/display mode functions 121 include a PC application start-up function 122, a PC application operation function 123, and a connected device operating function 133. The dual mode functions 124 include a recording screen storing function 125, and an ending function 126.

A recording screen database 131 stores screen data that is used when executing the handwriting input/record mode functions 113, the PC operation/display mode functions 121, and the dual mode functions 124. The screen data includes bitmap image data used as a background (including compressed data) or the like, as well as handwriting stroke data. In addition, a state information database 132 is used when executing the state information initializing function 127, the state information registering function 128, the state information display controlling function 129, and the state information displaying function 130. The data structure of the state information database 132 will be described later.

The initial setting function 111 is a function for an initial setting when starting up an application.

The operation event obtaining function 112 is a function for receiving an operation from a user to execute a function corresponding to the operation.

The handwriting input function 114 is a function for displaying, deleting, editing and recording handwriting information in response to a handwriting input operation by a user, as well as displaying a recording screen having the content of current screen images without handwriting as a background.

The recording screen switching function 115 is a function for displaying the handwriting information and the background image on the recording screen in response to a button operation by a user.

The new screen function 116 is a function for recording or clearing the current screen content in response to a button operation by a user.

The pen color changing function 117 is a function for changing the color of a handwriting line in response to a button operation by a user.

The pen thickness changing function 118 is a function for changing the thickness of a handwriting line in response to a button operation by a user.

The edit mode function 119 is a function for switching between a handwriting input operation and a handwriting select/edit operation in response to a button operation by a user.

The delete mode function 120 is a function for switching between a handwriting input operation and a handwriting delete operation in response to a button operation by a user.

The PC application start-up function 122 is a function for starting up an application in the dedicated PC in response to a button operation by a user.

The PC application operation function 123 is a function for operating a PC application by inputting a forward page key, a backward page key, and a determination key to the PC application in response to a button operation by a user.

The connected device operating function 133 is a function for operating the connected device 3 in response to a button operation by a user.

The recording screen storing function 125 is a function for saving screen information to be recorded in a predetermined format in response to a button operation by a user.

The ending function 126 is a function for ending an application in response to a button operation by a user.

The state information initializing function 127 is a function for initializing state information. The state information includes status of applications displayed for a user such as: mode information, for example, the mode of the blackboard application (the handwriting input/record mode or the PC operation/display mode); information about an operation executed by the user; accompanying information such as a current time, an elapsed time, etc., and the like.

The state information registering function 128 is a function for receiving an operation event triggered with an operation by the user, and registering a record of state information to be displayed corresponding to the operation event.

The state information display controlling function 129 is a function for monitoring state information registered as to be displayed at a predetermined timing or a regular interval, and determining the information to be displayed at the timing.

The state information displaying function 130 is a function for displaying a record of state information.

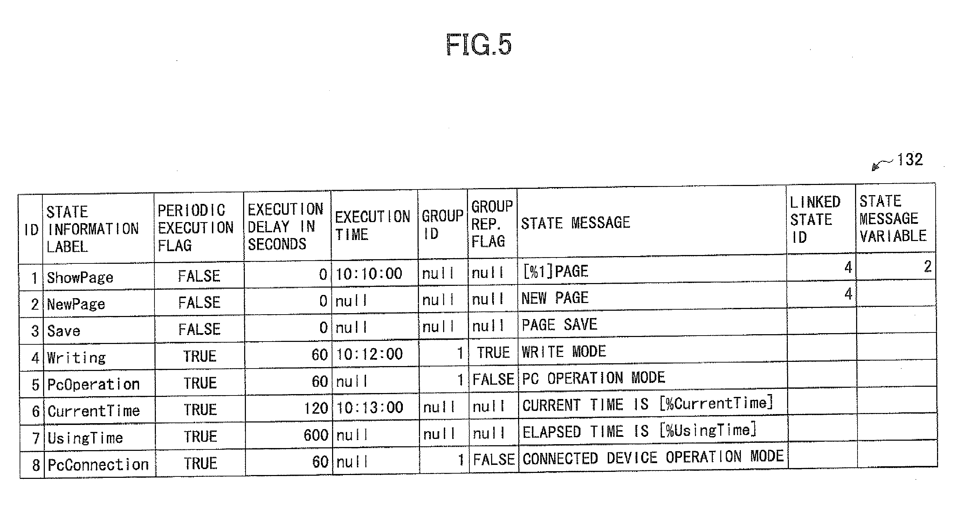

FIG. 5 is a schematic view illustrating an example of a data structure of the state information database 132.

As shown in FIG. 5, a record horizontally arranged corresponds to a unit of state information that includes fields of "ID", "state information label", "periodic execution flag", "execution delay in seconds", "execution time", "group ID", "group representative flag", "state message", "linked state ID", "state message variable ", etc.

The "ID" is identification information of a record. The "state information label" designates the content of a record of state information. The "periodic execution flag" designates whether a record of state information is displayed periodically or temporarily. The "execution delay in seconds" designates an execution interval if displayed periodically. The "execution time" designates a time to display a record of state information. The "group ID" designates grouping information about a group of records, each one of which is displayed periodically and exclusively to the other records in the same group. The "group representative flag" designates whether a record is displayed at initialization among a group of records having the same group ID. The "state message" is a string used for displaying a record of state information. The "linked state ID" designates an ID of another record whose display setting is linked with a record. The "state message variable" holds a value of a state message variable.

For example, a record with ID 4 in FIG. 5 is the record of state information having the following properties: the mode is the handwriting input/record mode triggered by handwriting on the screen; the periodic execution flag is set to TRUE to be displayed periodically; the execution delay in seconds is set to 60 to be displayed every 60 s; and the next display time is "10:12:00". The record also has the group ID 1 to be displayed exclusively to the other records of state information having the group ID 1, namely, if one of the other records of state information having the group ID 1 is displayed, then the record with ID 4 is hidden. Having the group representative flag set to TRUE, the record with ID 4 is displayed at initialization with message "write mode". The record does not have a linked record nor a state message variable specified.

It is noted that the operation event obtaining function 112 described above processes not only events of a handwriting input, a PC operation, and a page selection, but also events triggered when selecting an operation button displayed on an application screen, which will be described later. An event corresponding to an operation button is associated with an ID in the state information database 132 shown in FIG. 5, to make it possible to identify which event is triggered when obtaining an event.

### <Screen configuration>

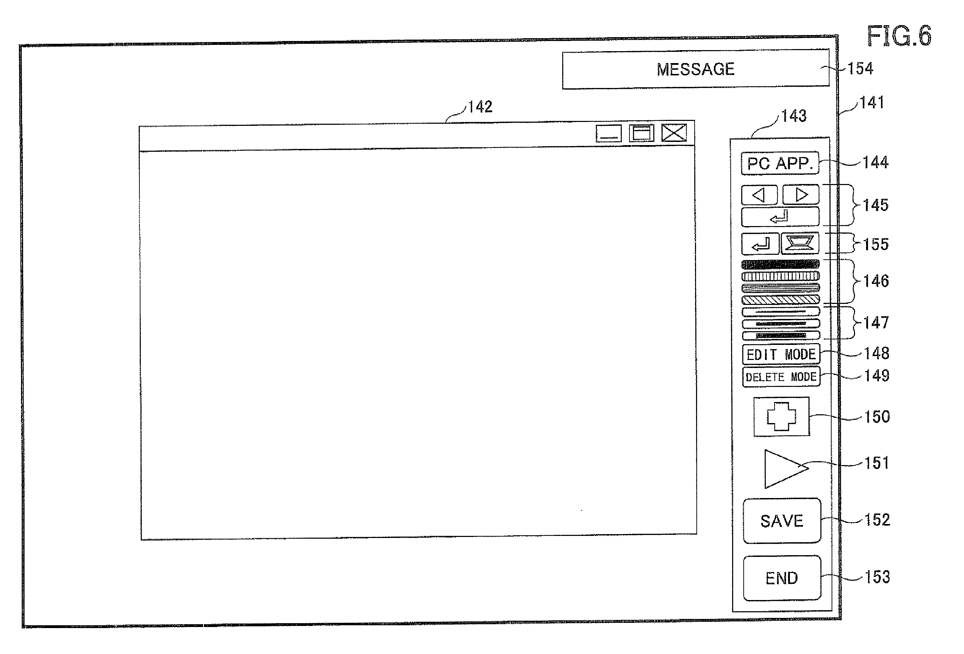

FIG. 6 is a schematic view illustrating an application screen 141.

As shown in FIG. 6, an operation button bar 143 is displayed about the right end of the application screen 141. The operation button bar 143 includes a PC application start-up button 144, a PC application operation button 145, a connected device operating button 155, four pen color changing buttons 146, three pen thickness changing buttons 147, an edit mode button 148, a delete mode button 149, a new screen button 150, a recording screen calling button 151, a screen saving button 152, and an ending button 153.

The PC application start-up button 144 is operated when executing the PC application start-up function 122 to start up a PC application.

The PC application operation button 145 is operated when applying the PC application operation function 123 to a PC application being displayed. In the example in FIG. 6, there are three buttons, namely, a forward page button, a backward page button, and a determination button.

The connected device operating button 155 is operated when executing an operation function of the connected device 3.

The pen color changing buttons 146 are operated when executing the pen color changing function 117 to change the pen color. In the example in FIG. 6, the color can be selected from four colors.

The pen thickness changing buttons 147 are operated when executing the pen thickness changing function 118 to change the pen thickness. In the example in FIG. 6, there are three choices for the thickness.

The edit mode button 148 is operated when executing the edit mode function 119 to switch between a handwriting input operation and an edit mode operation.

The delete mode button 149 is operated when executing the delete mode function 120 to switch between a handwriting input operation and a deleting operation.

The new screen button 150 is operated when executing the new screen function 116 to generate and display a new screen.

The recording screen calling button 151 is operated when executing the recording screen switching function 115 to switch and display recording screens.

The screen saving button 152 is operated when executing the recording screen storing function 125 to save screen information.

The ending button 153 is operated when executing the ending function 126 to end an application.

A handwriting input operation and above button operations covers all operations available in the electronic information board application in the present embodiment, with which a user can use an application without consciously specifying a mode such as the PC application operation/display mode or the writing input/record mode.

At the upper right corner of the application screen 141, there is a state information window 154 to display a piece of state information. The state information window 154 is automatically displayed if there is any information to be displayed, then automatically hidden after a specified time has passed.

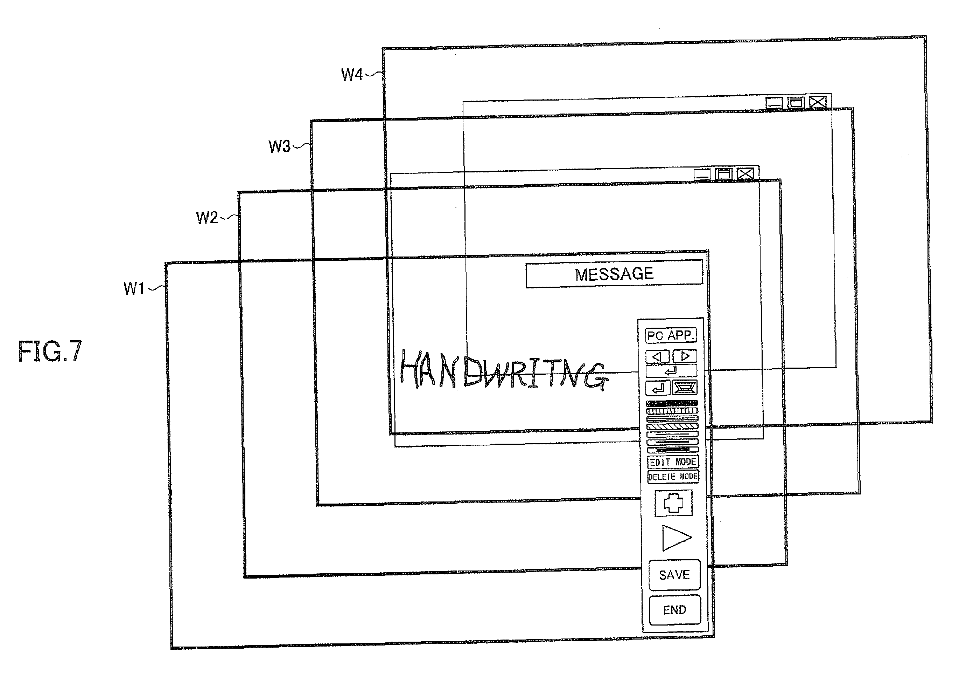

FIG. 7 is a schematic view illustrating a window layer configuration of the application screen 141. Here, it is assumed that an application is built as a WPF application on a Windows (trademark) OS of Microsoft.

As shown in FIG. 7, window layers includes, from the top, an operation button window W1 having all operation buttons on it, a handwriting window W2 for inputting, editing, displaying a handwriting, a background window W3 for displaying a background image (a PC application image) while inputting and editing a handwriting, and a desktop W4 of the OS. A PC application is displayed on the desktop W4. Three layers of windows W1, W2, W3 are dynamically displayed or hidden when the functions are executed.

To receive an event at each window and to display the content of each window appropriately when the windows are overlapped, the backgrounds of the operation button window W1 and the handwriting window W2 are set transparent. If InkCanvas, which is included in the development environment offered by Microsoft, is used for inputting, editing, displaying of handwritings on the handwriting window W2, the background of InkCanvas can be set transparent.

### <Initial setting and Operation event obtaining function>

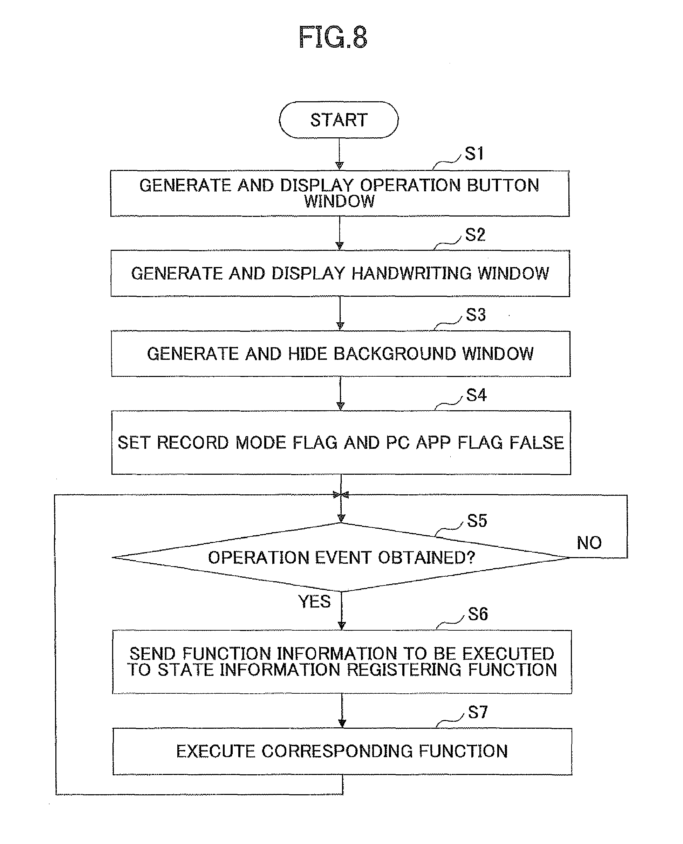

FIG. 8 is a flowchart of the initial setting function 111 and the operation event obtaining function 112.

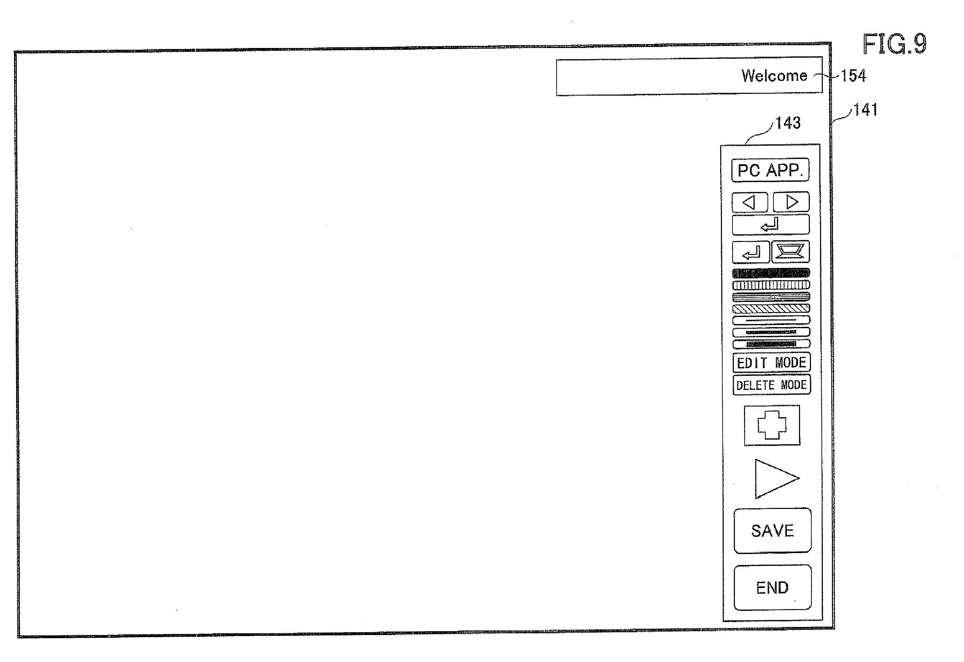

As shown in FIG. 8, once started, the initial setting function 111 generates the operation button window W1, the handwriting window W2, and the background window W3 (Steps S1 to S3), and overlaps these windows W1-W3 in the order shown in FIG. 7. Here, the background window W3 is hidden in the initial state so that only the operation button bar 143 and the state information window 154 are displayed on the application screen 141 as shown in FIG. 9.

Next, a record mode flag and a PC application flag are set to False in the initial state (Step S4). The record mode flag indicates whether a recording screen is displayed, and the PC application flag indicates whether a PC application has been started up.

After the initialization, the operation event obtaining function 112 waits for an operation event triggered by a user (Step S5).

If the user pushes a desired operation button in the button bar 143 with a pen device or the like, an operation event is obtained (YES at Step S5), whose function information is sent to the state information registering function (Step S6).

This triggers the function corresponding to the pushed button (Step S7) to start. Here, besides pushing operation buttons, a user can input, delete, select, or edit handwritings by "tap and drag" with the pen device outside of the operation button bar 143.

### <Handwriting input function>

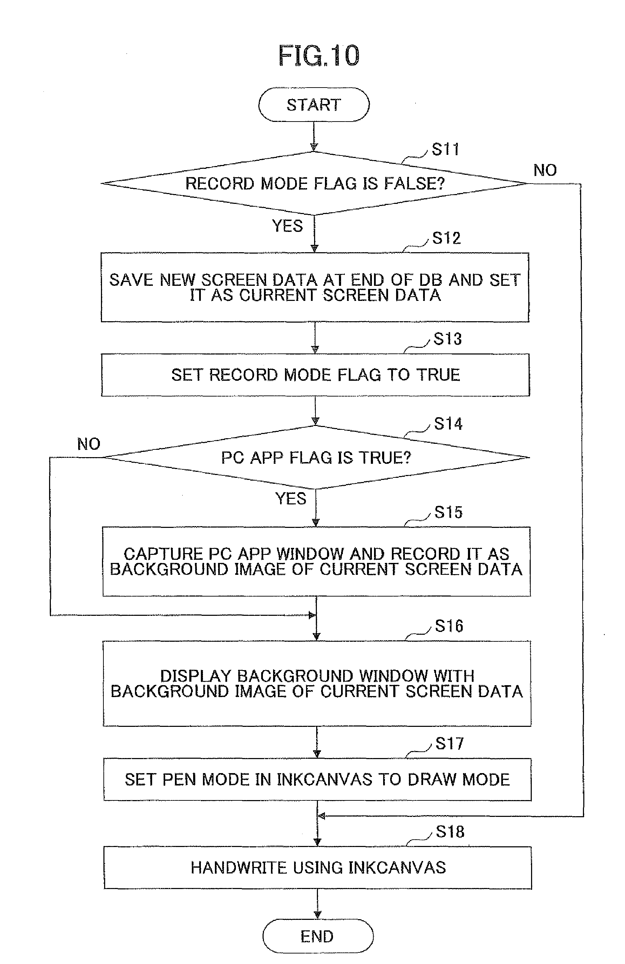

FIG. 10 is a flowchart of the handwriting input function 114. As mentioned earlier, it is assumed InkCanvas is used which is included in the development environment offered by Microsoft.

As shown in FIG. 10, the function is triggered when InkCanvas receives a "tap and drag" event outside of the button bar 143 input by the user.

Once the function has started, first, the record mode flag is checked (Step S11). If the record mode flag is False, namely, the displayed screen is not set as a recording screen (YES at Step S11), a new recording screen is generated.

To generate a new recording screen, first, screen data is generated with handwriting information and a background image, which is added at the end to the recording screen database 131 to be set as the current screen data (Step S12). In this example, it is assumed that the handwriting information and the background image are null when generating the screen data. The record mode flag is set to True (Step S13).

Next, the PC application flag is checked to determine whether the PC application is displayed (Step S14). If displayed (YES at Step S14), the content of the PC application window is captured to be set as the background image of the current screen data (Step S15).

Next, the background window is displayed with the background image of the current screen data (Step S16).

Next, the pen mode of InkCanvas is set to draw mode, or handwriting mode, to complete the generation of the recording screen (Step S17). Then, the user can handwrite using InkCanvas (Step S18).

On the other hand, if the record mode flag is set to True, namely, the recording screen has been already displayed (NO at Step S11), the user can handwrite using InkCanvas with a current setting of the pen mode (Step S18).

### <Delete mode function>

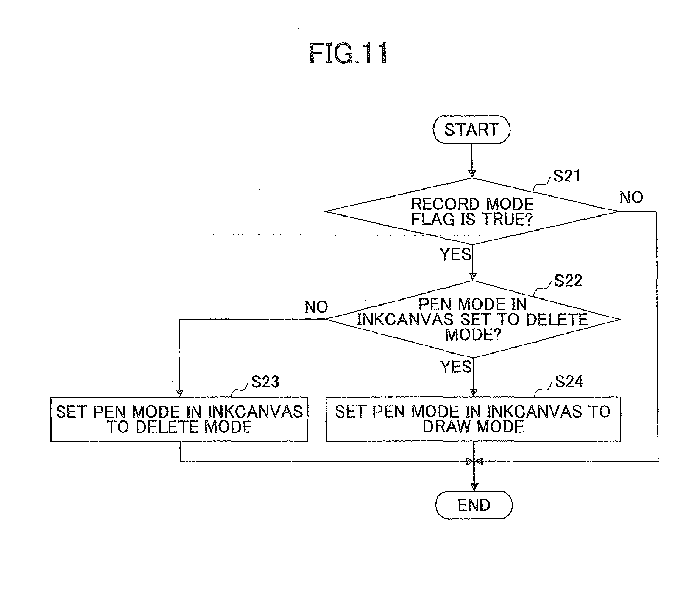

FIG. 11 is a flowchart of the delete mode function 120.

As shown in FIG. 11, the delete mode function 120 is triggered when the user pushes the delete mode button 149.

Once the function has started, first, the record mode flag is checked (Step S21). Only if the record mode flag is True, namely, the recording screen is displayed (YES at Step S21), the following steps are executed.

If continued, a current pen mode of InkCanvas is checked (Step S22). If the mode is a mode other than delete mode (NO at Step S22), the pen mode is set to delete mode (Step S23). If the pen mode is already set to delete mode (YES at Step S22), the pen mode is set to draw mode (Step S24) so that the user can handwrite with an updated pen mode setting.

Here, the pen mode is not explicitly shown to the user in this example because InkCanvas automatically changes the shape of a cursor according to the pen mode. The pen mode may be explicitly shown to the user if there is no mechanism to change the shape of a cursor automatically.

### <Edit mode function>

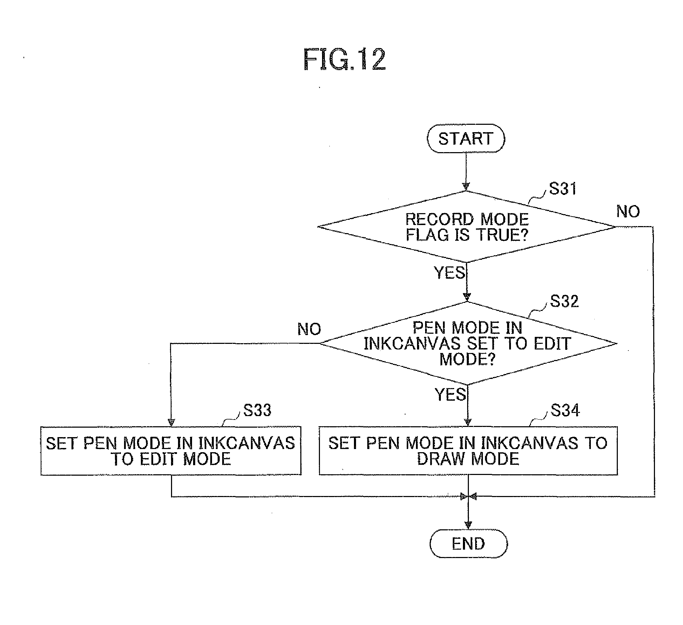

FIG. 12 is a flowchart of the edit mode function 119.

The edit mode function 119 is triggered when the user pushes the edit mode button 148.

As shown in FIG. 12, once the function has started, first, the record mode flag is checked (Step S31). Only if the record mode flag is True, namely, the recording screen is displayed (YES at Step S31), the following steps are executed.

If continued, a current pen mode of InkCanvas is checked (Step S32). If the mode is a mode other than edit mode (NO at Step S32), the pen mode is set to edit mode (Step S33). If the pen mode is already set to edit mode (YES at Step S32), the pen mode is set to draw mode (Step S34) so that the user can handwrite with an updated pen mode setting.

Here, the pen mode is not explicitly shown to the user in this example because InkCanvas automatically changes the shape of a cursor according to the pen mode. The pen mode may be explicitly shown to the user if there is no mechanism to change the shape of a cursor automatically.

### <Pen color changing function>

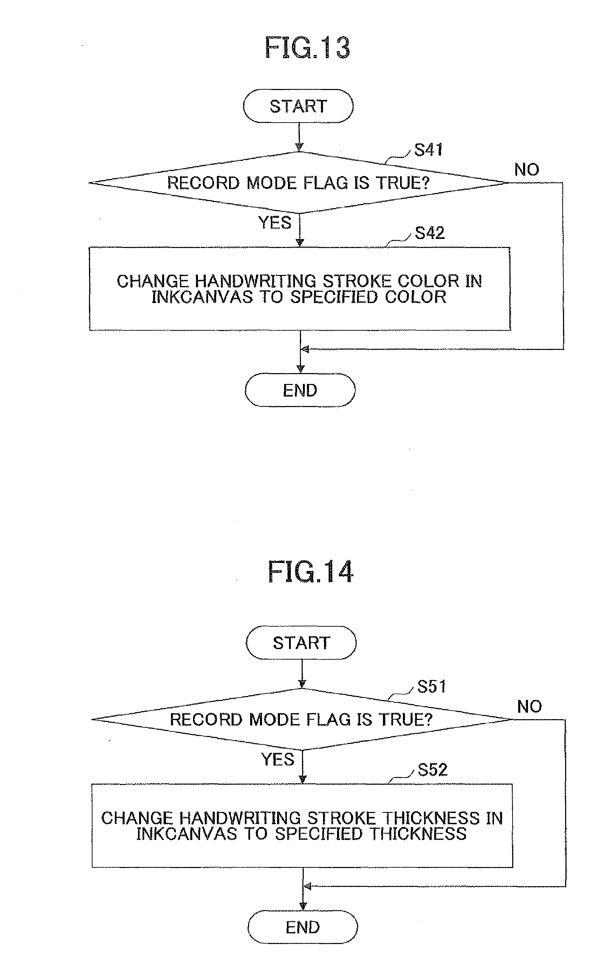

FIG. 13 is a flowchart of the pen color changing function 117.

The pen color changing function 117 is triggered when the user pushes one of the pen color changing buttons 146.

As shown in FIG. 13, once the function has started, first, the record mode flag is checked (Step S41). Only if the record mode flag is True, namely, the recording screen is displayed (YES at Step S41), the following steps are executed.

If continued, a current stroke color of InkCanvas is changed to the color assigned to the pushed button (Step S42) so that the user can handwrite with the stroke color.

For example, if a black pen color changing button is pushed, the stroke color becomes black, or, if a red pen color changing button is pushed, the stroke color becomes red.

### <Pen thickness changing function>

FIG. 14 is a flowchart of the pen thickness changing function 118.

The pen thickness changing function 118 is triggered when the user pushes one of the pen thickness changing buttons 147.

As shown in FIG. 14, once the function has started, first, the record mode flag is checked (Step S51). Only if the record mode flag is True, namely, the recording screen is displayed (YES at Step S51), the following steps are executed.

If continued, a current stroke thickness of InkCanvas is changed to the thickness assigned to the pushed button (Step S52) so that the user can handwrite with the stroke thickness.

For example, there are three pen thickness changing buttons 147 in the operation button bar 143 in FIG. 6 so that the stroke thickness can be changed according to the pushed button.

### <New screen function>

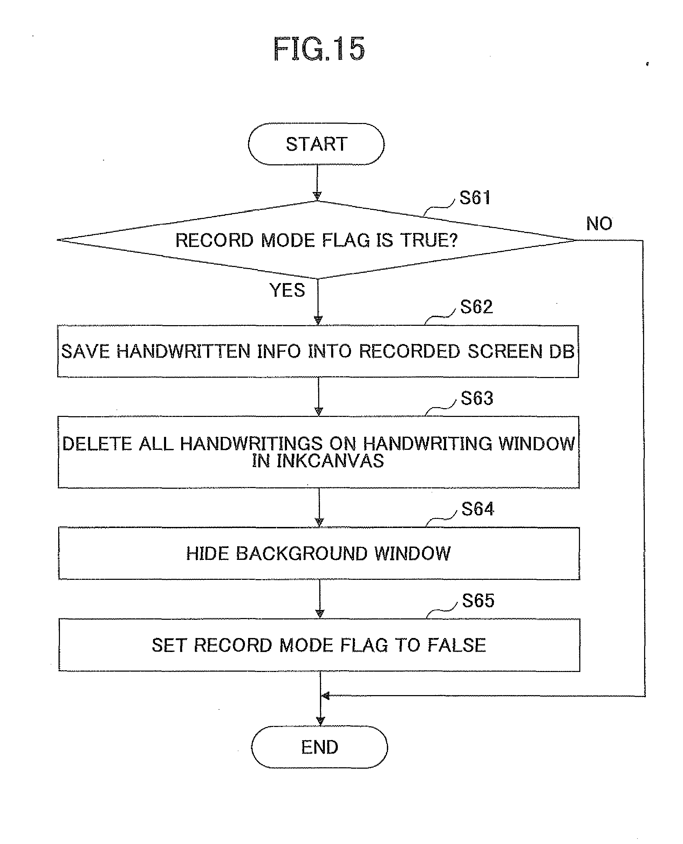

FIG. 15 is a flowchart for the new screen function 116.

The new screen function 116 is triggered when the user pushes the new screen button 150.

As shown in FIG. 15, once the function has started, first, the record mode flag is checked (Step S61). Only if the record mode flag is True, namely, the recording screen is displayed (YES at Step S61), the following steps are executed.

If continued, handwriting stroke information held by InkCanvas is saved in a record corresponding to the current screen data in the recording screen database 131 (Step S62).

Next, the handwriting stroke information held by InkCanvas is deleted (Step S63), the background window is hidden (Step S64), and the record mode flag is set to False (Step S65).

Having the recording screen hidden, a PC application is displayed if the PC application has been started up. If a user starts handwriting again, a new recording screen is generated so that the user uses the new screen for handwriting.

### <Recording screen switching function>

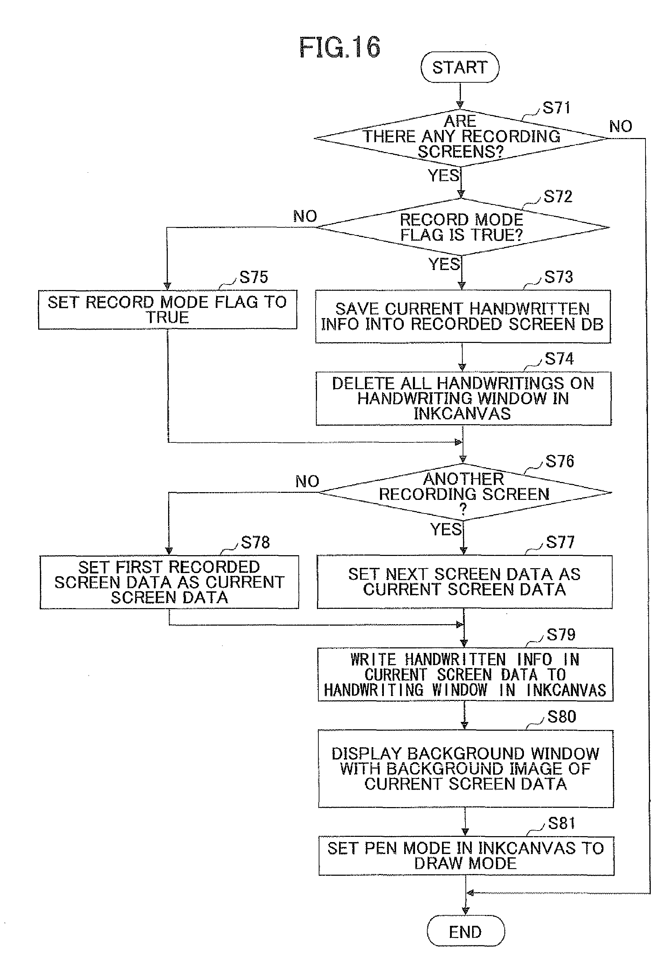

FIG. 16 is a flowchart of the recording screen switching function 115.

The recording screen switching function 115 is triggered when the user pushes the recording screen calling button 151.

As shown in FIG. 16, once the function has started, first, it is determined whether a recording screen is saved (Step S71). If there are no recording screens (NO at Step S71), the following steps are not executed.

If there are recording screens (YES at Step S71), the record mode flag is checked (Step S72). If the record mode flag is True (YES at Step S72), handwriting stroke information held by InkCanvas is saved in a record corresponding to the current screen data in the recording screen database 131 (Step S73), then the handwriting stroke information held by InkCanvas is deleted (Step S74).

If the record mode flag is False (NO at Step S72), the record mode flag is set to True (Step S75).

Next, if there is a next record to a record corresponding to the current screen data in the recording screen database 131 (YES at Step S76), the next record is set to the current screen data (Step S77), otherwise (NO at Step S76), the first record in the recording screen database 131 is set to the current screen data (Step S78).

Next, the handwriting stroke information held by the current screen data is written to InkCanvas (Step S79), then, the background window is displayed with the background image (Step S80).

Finally, the pen mode of InkCanvas is set to draw mode (Step S81), to conclude the procedure.

With this procedure, the recording screens saved in the recording screen database 131 can be displayed one by one, to which handwriting can be applied again. It may be convenient for a user if an additional function is added, such as displaying a list of recording screens with which the recording screens can be reviewed, although details are omitted here.

### <PC application start-up function>

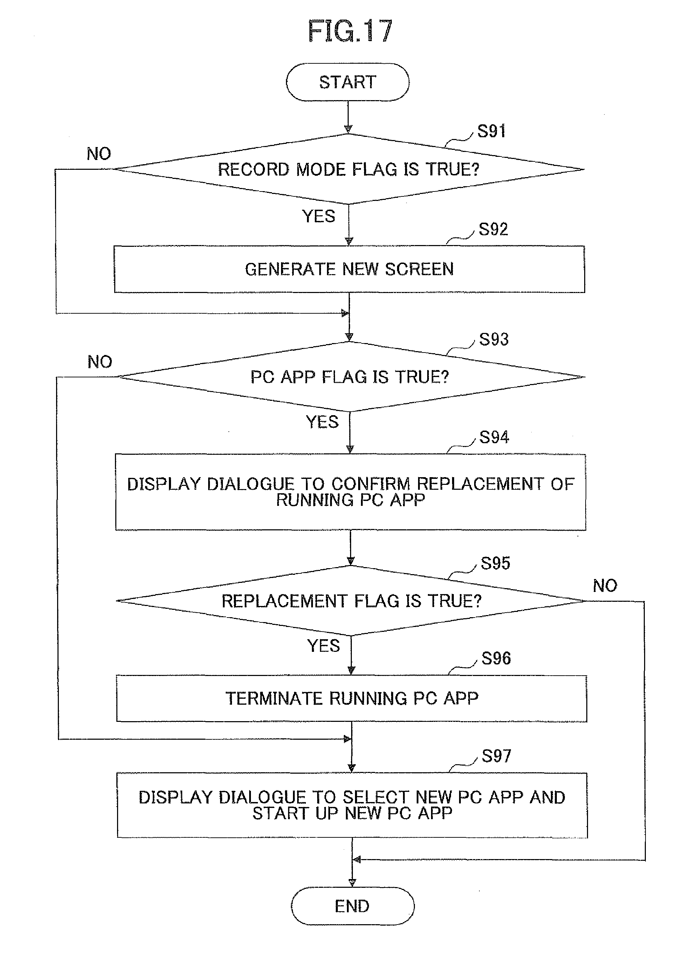

FIG. 17 is a flowchart of the PC application start-up function 122.

The PC application start-up function 122 is triggered when the user pushes the PC application start-up button 144.

As shown in FIG. 17, once the function has started, first, the record mode flag is checked (Step S91). If the record mode flag is True, namely, the recording screen is displayed (YES at Step S91), the new screen function 116 is executed (Step S92).

Next, the PC application flag is checked (Step S93). If True, namely, the PC application has been started and displayed (YES at Step S93), a replacement of the PC application is confirmed (Step S94, S95). If no replacement (NO at Step S95), the function ends, otherwise (YES at Step S95), the running application is terminated (Step S96).

Next, a dialogue for selecting a new PC application is displayed for a user, and the selected PC application is started up (Step S97), whose process information is obtained to end the function.

With this function, a window of a desired PC application can be displayed on the desktop of the OS. Acrobat Reader (trademark) of Adobe or Office Viewer (trademark) of Microsoft may be started up as a PC application in this example.

### <PC application operation function>

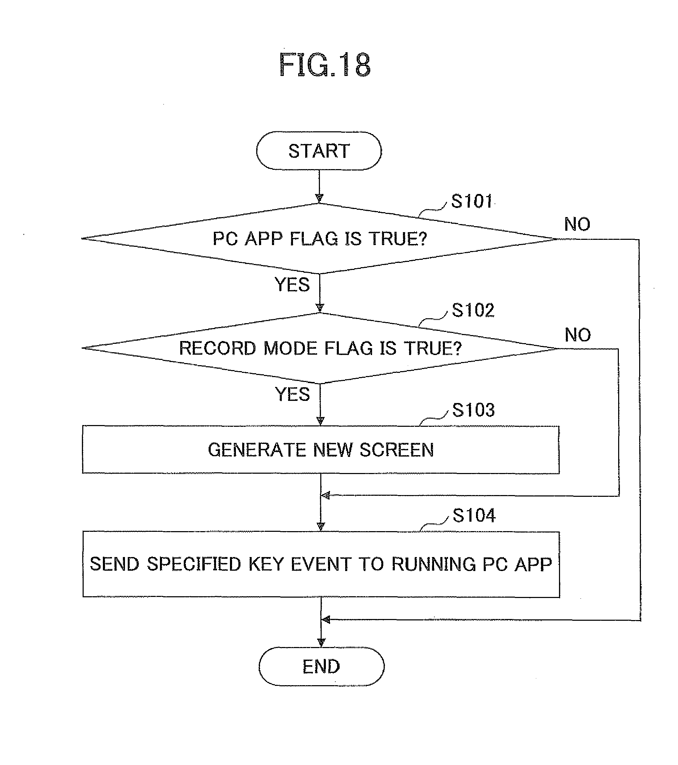

FIG. 18 is a flowchart of the PC application operation function 123.

The PC application operation function 122 is triggered when the user pushes one of the PC application operation buttons 145.

As shown in FIG. 18, once the function has started, first, the PC application flag is checked (Step S101). Only if the PC application flag is True, namely, a PC application has been started up (YES at Step S101), the following steps are executed.

If continued, the record mode flag is checked (Step S102). If the record mode flag is True, namely, the recording screen is displayed (YES at Step S102), the new screen function 116 is executed (Step S103).

Next, based on the process information of the PC application obtained with the PC application start-up function 122, a key event corresponding to an operation button is sent to the PC application (Step S104), then the function ends.

For example, on the screen shown in FIG. 6, there are three PC application operation buttons 145: the forward page key, the backward page key, and the determination key. By pushing one of these buttons while an PC application is running, the corresponding key event can be sent to the PC application.

### <Recording screen saving function>

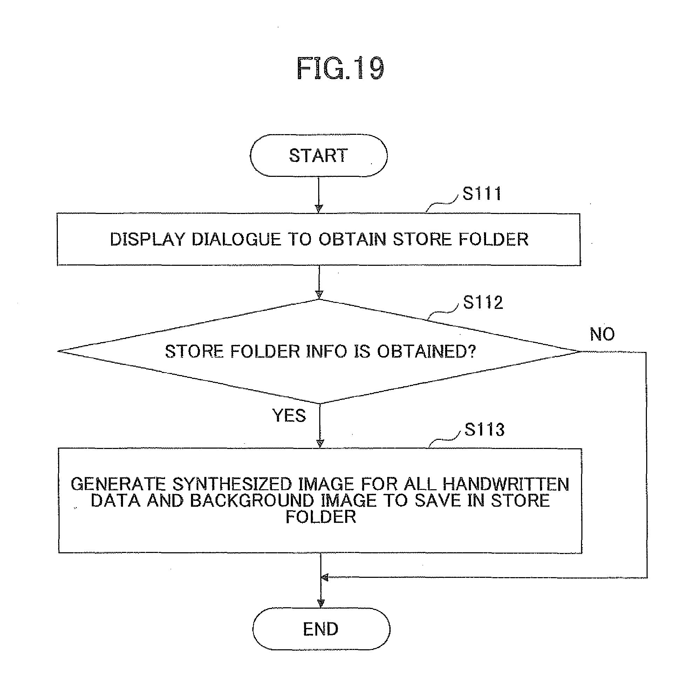

FIG. 19 is a flowchart of the recording screen saving function 125.

The recording screen saving function 125 is triggered when the user pushes the screen saving button 152.

As shown in FIG. 19, once the function has started, first, a dialogue for obtaining a store folder is displayed (Step S111).

Next, if store folder information is obtained (YES at Step S112), a synthesized image of the handwriting data and the background image is generated for every record of screen data in the recording screen database 131, to be stored in the store folder (Step S113).

Although it is assumed in this example that all data is saved, it may be convenient for a user if an additional function is added for selecting data to be saved.

### <Connected device operating function>

By connecting a connected device 3 with the dedicated PC by VGA or DisplayPort, a user may view an image on the connected device 3 on the display device 11. By releasing the connection with the connected device 3, the displayed image from the connected device 3 can be discarded.

### <Ending function>

When a user pushes the ending button 153, the electronic information board application is terminated. It may be convenient for a user if a confirmation is made for saving recording screens before the ending, although details are omitted here.

### <State information initializing function>

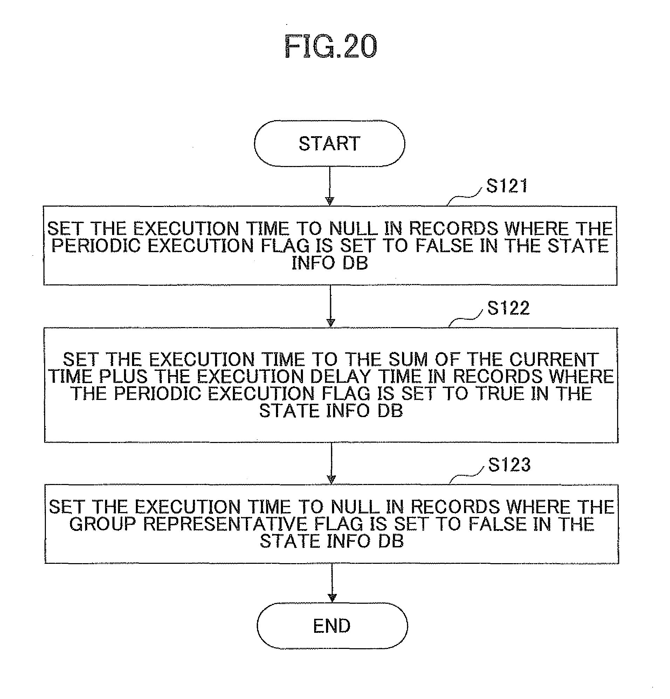

FIG. 20 is a flowchart of the state information initializing function 127.

Once the electronic information board application has started, first, the state information database 132 is initialized for managing records of state information.

As shown in FIG. 20, the execution time field is set to null in records where the periodic execution flag is set to false, namely, the records for the state information temporarily executed, in the state information database 132 (Step S121). By setting the execution time field to null, the record of state information can be made hidden. This detail will be described late.

Next, the execution time field is set to the sum of the current time plus the execution delay time in records where the periodic execution flag is set to true in the state information database 132 (Step S122).

Next, set the execution time field in records to null where the group representative flag is set to false, namely, the records hidden in the initial state, in the state information database 132 (Step S123).

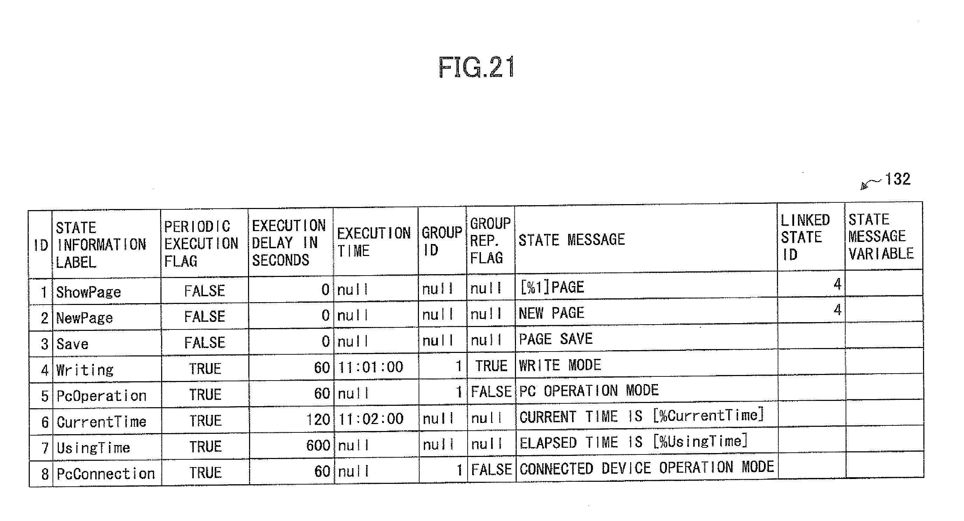

For example, FIG. 21 shows the state information database 132 after the initialization has been executed at time 11:00:00. In this example, for records with the periodic execution flag set to false, or the records with ID 1, 2, and 3, the execution time field is set to null. Also, for records with the periodic execution flag set to true and with the group representative flag set to false, or the records with ID 5 and 8, the execution time field is set to null. Other records have an execution time of 11:00:00 plus an added value in the execution delay in seconds field in their execution time field, for example, 11:01:00, 11:02:00.

### <State information registering function>

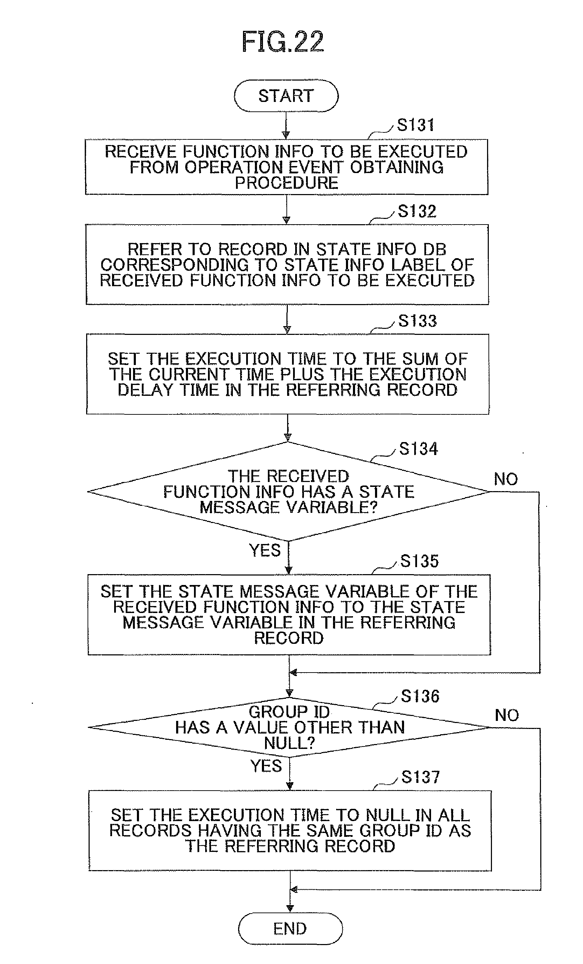

FIG. 22 is a flowchart of the state information registering function 128.

As shown in FIG. 22, once the function has started, first, the function information sent by the operation event obtaining function 112 is received (Step S131). As the function information, an identifier that can uniquely identify a record in the state information database 132 can be used. For example, if the new screen button 150 is pushed in the operation button bar 143, an identifier 2 may be received as the function information. Also, if the forward page key is pushed, another identifier 1 may be received as the function information along with the state message variable value set to a current page number plus 1.

Next, a record in the state information database 132 corresponding to the received function information is referred to (Step S132), to set the execution time field to the sum of the current time plus the execution delay time in the referring record (Step S133).

Next, if the received function information has a state message variable value (YES at Step S134), the state message variable value of the received function information is set to the state message variable in the referring record (Step S135).

Next, if the group ID field has a value other than null (YES at Step S136), namely, if there are exclusive records of state information, the execution time field is set to null for all records having the same group ID as the referring record, which makes these records hidden (Step S137).

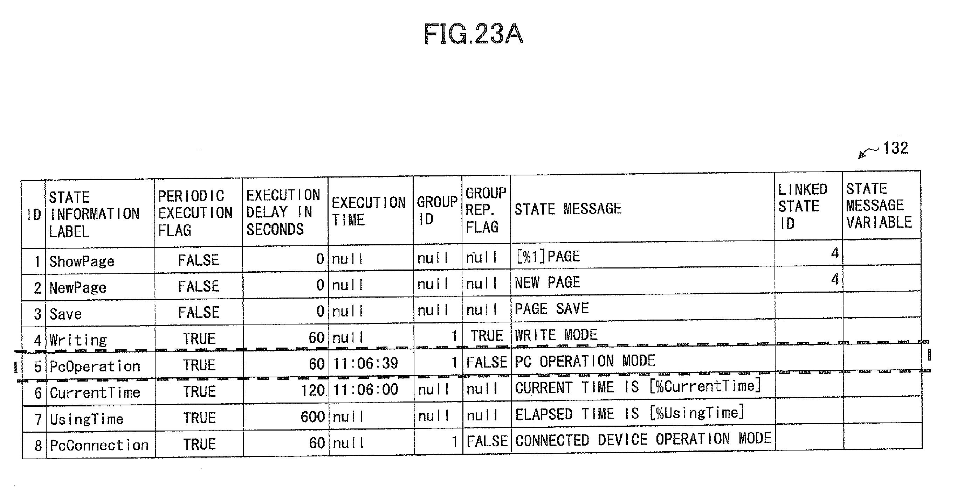

FIGS. 23A-23C are schematic views illustrating example states of the state information database 132. FIGS. 23A-23C respectively correspond to a state in which the PC application operation button 145 is pushed at 11:05:39, a state with the new screen button 150 pushed at 11:13:09, and a state with the new screen button 150 pushed at 11:27:50.

In FIG. 23A, an ID value 5 is received as the function information at 11:05:39, hence for the record with ID 5, the execution time is set to 11:06:39, which is 11:05:39 plus 60 s, for the record with ID 4 whose group ID is 1 which is the same as the record with ID 5, the execution time is set to null.

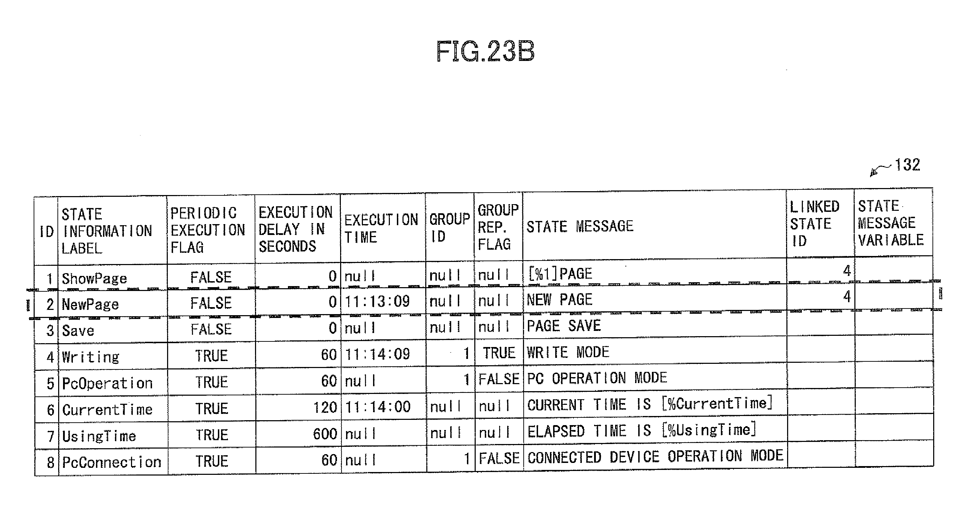

In FIG. 23B, an ID value 2 is received as the function information at 11:13:09, hence for the record with ID 2, the execution time is set to 11:13:09, which is 11:05:39 plus 0 s.

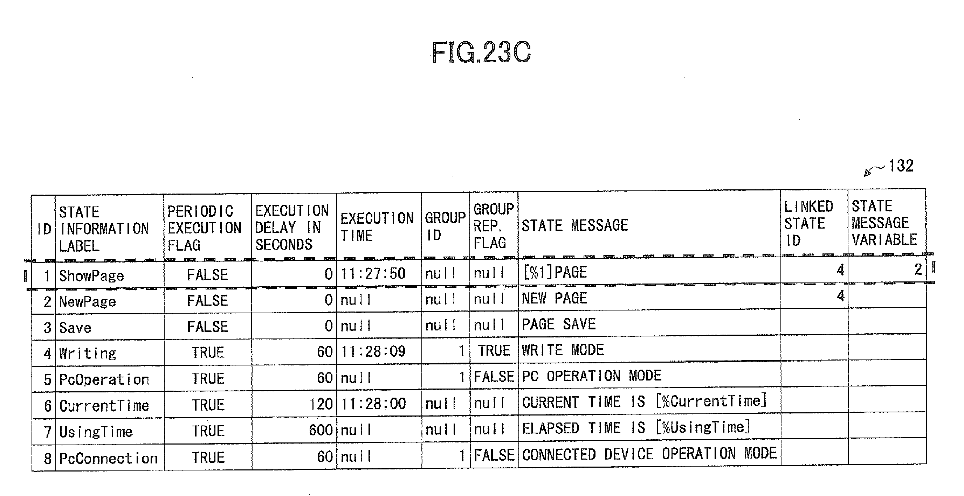

In FIG. 23C, an ID value 1 is received as the function information at 11:27:50, hence for the record with ID 1, the execution time is set to 11:27:50, which is 11:27:50 plus 0 s. Also, the state message variable is set to 2.

### <State information display controlling function>

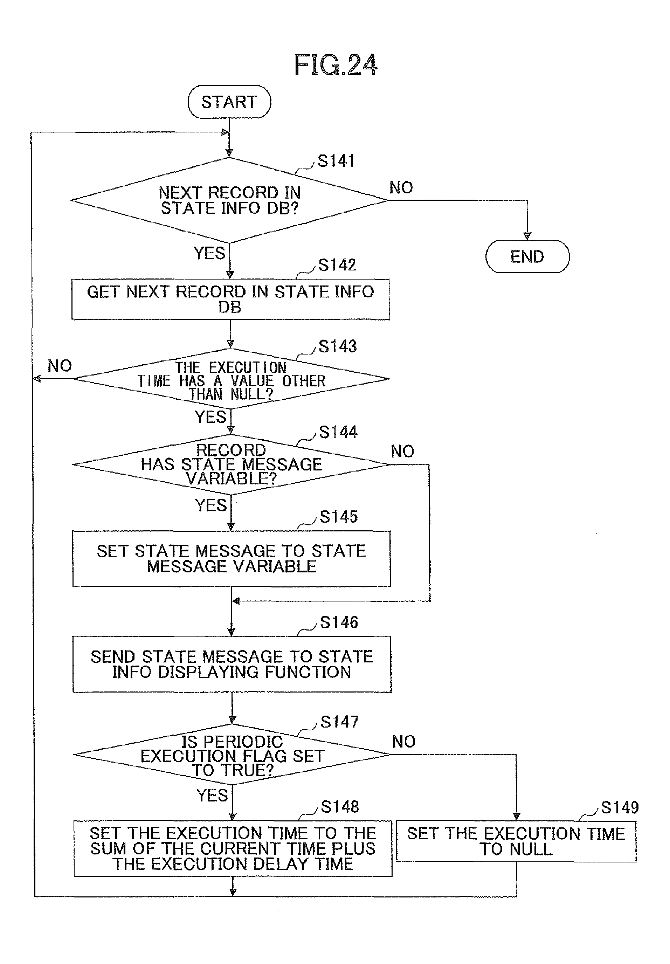

FIG. 24 is a flowchart of the state information display controlling function 129.

The state information display controlling function 129 is executed at every predetermined interval, for example, 0.5 s interval.

As shown in FIG. 24, once the function has started, the state information database 132 is referred to for executing the following steps for each record until there is no remaining record in the state information database 132 (NO at Step S141).

First, a record is obtained from the state information database 132 (Step S142), to determine that the execution time of the obtained record has a value other than null and the execution time has been reached (Step S143). On a positive determination, the following steps are executed.

The state message variable is checked (Step S144), then, if the state message variable has a value (YES at Step S144), the state message is set with the value of the state message variable (Step S145).

Next, the state message is sent to the state information displaying function 130 (Step S146).

Next, the periodic execution flag of the record to be displayed is checked (Step S147). If true, namely, it is a record to be displayed periodically (YES at Step S147), the execution time is set to the current time plus the execution delay in seconds (Step S148). If false, namely, it is a record to be displayed temporarily (NO at Step S147), the execution time is set to null (Step S149).

For example, if the state information display controlling function 129 is executed at 11:27:50 with the state information database 132 in FIG. 23C, the execution time of the record with ID 1 is equivalent to the current time. Hence, the state message is sent to the state information displaying function 130, and the execution time of the record is set to null.

### <State information displaying function>

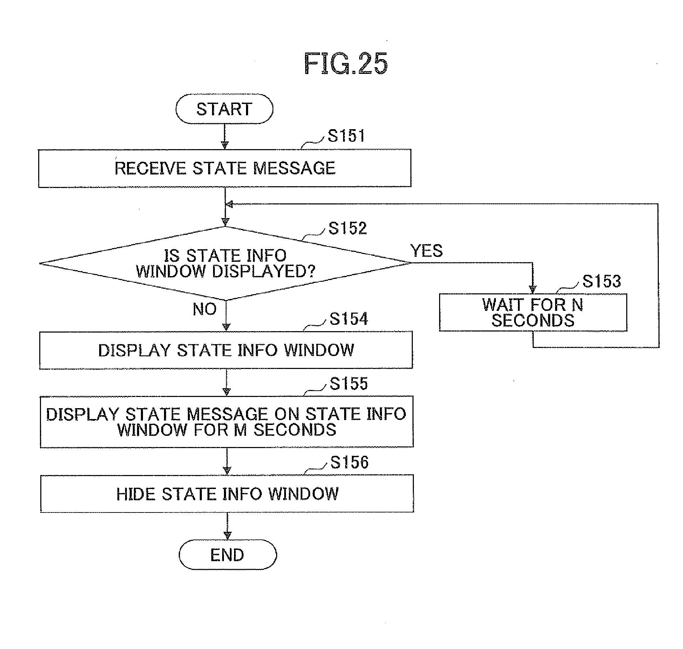

FIG. 25 is a flowchart of the state information display function 130.

The state information display function 130 is executed when receiving a state message sent from the state information display controlling function 129.

As shown in FIG. 25, once the function has started, first, a state message is received (Step S151), then, it is determined whether a record of state information is being displayed (Step S152), if being displayed (YES at Step S152), wait for N seconds (Step S153). The wait time may be set to about 0.5 s as long as it is a smaller value than the display time of the state information window, which will be described later.

If a record of the state information is not displayed (NO at Step S152), the state information window is displayed (Step S154), then the state message is displayed in the state information window for M seconds (Step S155). The display time may by about 2 s.

Finally, the state information window is hidden (Step S156).

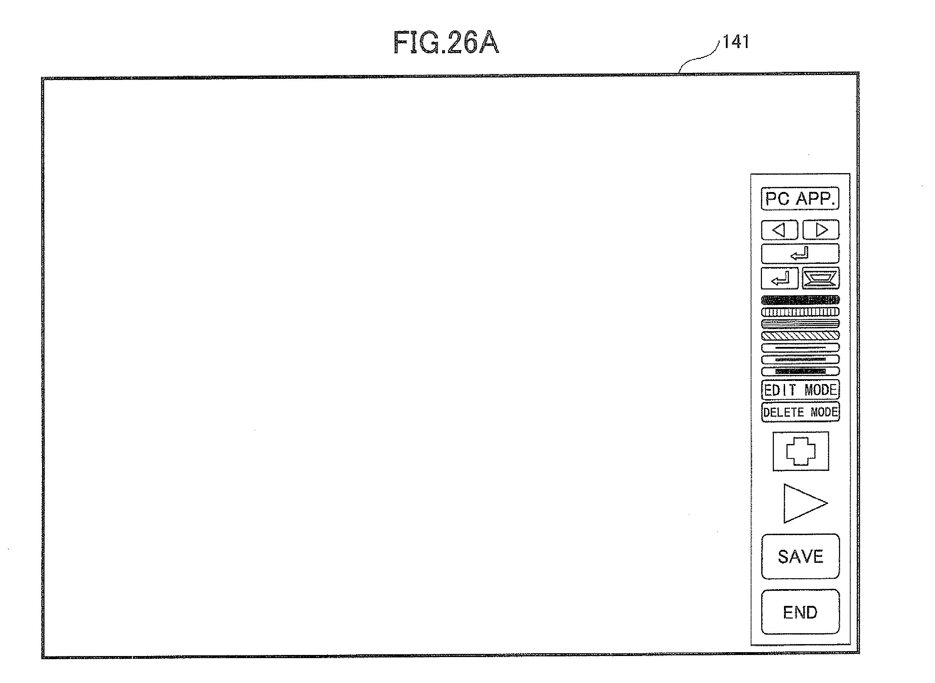

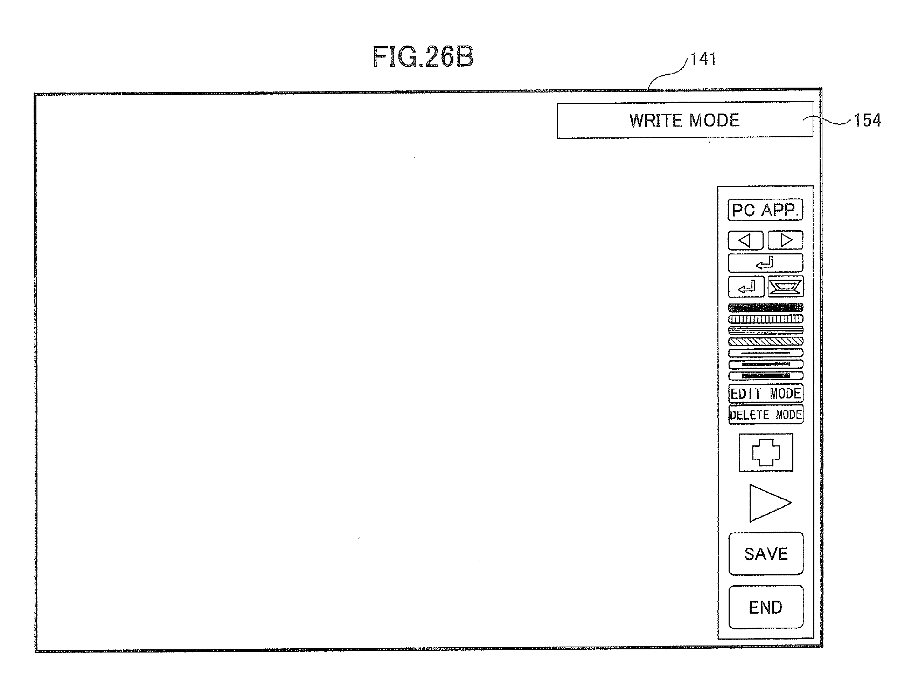

FIGS. 26A-26B are schematic views illustrating application screens without and with a state information window. Suppose that the state message of the record ID 4 in the state information database 132 shown in FIG. 5 is received. In this case, the application screen changes from the one shown in FIG. 26A to the other shown in FIG. 26B with the state information window 154 displayed for two seconds, then, changes back to FIG. 26A without the state information window 154. If there is no update on the state information, the state information window 154 is displayed again for two seconds after 60 seconds has elapsed.

### <Summary>

As described above, according to the present embodiment, it is possible to provide an electronic information board or the like with a display function, an input function from a display screen for handwriting as well as for controlling an externally connected PC, which displays a currently selected mode at a predetermined timing so that a user can avoid an operational mistake induced by a mode recognition mistake.

The present invention has been described as above with preferred embodiments. The present invention, however, is not limited to these embodiments, but various variations and modifications may be made without departing from the scope of the present invention.

The present application is based on and claims the benefit of priority of Japanese priority application NO. 2012-096609 filed on April 20, 2012, and Japanese priority application NO. 2013-035438 filed on Feb. 26, 2013, with the Japanese Patent Office, the entire contents of which are hereby incorporated by reference.

## Claims

1. A display controlling apparatus **characterized by** comprising:
a state information initializing section to initialize state information of an application to be displayed for a user;
a state information registering section to receive an operation event triggered by an operation of the user for registering a record of the state information into a database to be displayed corresponding to the received operation event;
a state information display controlling section to monitor the record of the state information registered in the database for determining the record of the state information to be displayed; and
a state information displaying section to display the determined record of the state information on a display screen,
wherein at least one record of the state information is displayed on the display screen at a predetermined timing.

2. The display controlling apparatus according to claim 1,
wherein the record of the state information includes information to be exclusively displayed from other records of the state information, the other records of the state information being hidden when the record of the information to be exclusively displayed is being displayed.

3. The display controlling apparatus according to claim 1 or 2,
wherein the record of the state information includes information indicating whether the record of the state information is to be displayed periodically,
wherein if the record of the state information includes the information indicating that the record of the state information is to be displayed periodically, the state information display controlling section determines that the record of the state information is displayed when a current time reaches a time for periodic display.

4. The display controlling apparatus according to claim 1 to 3,
wherein the record of the state information includes either of first mode information corresponding to a write mode of an electronic information board, or second mode information corresponding to a PC operation mode of the electronic information board.

5. A non-transitory computer-readable recording medium having a program stored therein for causing a computer to execute a method of display controlling, the program including:
a state information initializing step to initialize state information of an application to be displayed for a user;
a state information registering step to receive an operation event triggered by an operation of the user for registering a record of the state information into a database to be displayed corresponding to the received operation event;
a state information display controlling step to monitor the record of the state information registered in the database for determining the record of the state information to be displayed; and
a state information displaying step to display the determined record of the state information on a display screen,
wherein at least one record of the state information is displayed on the display screen at a predetermined timing.

6. A display system **characterized by** comprising:
a display device to display an image; and
a display controlling apparatus,
wherein the display controlling apparatus including
a state information initializing section to initialize state information of an application to be displayed for a user;
a state information registering section to receive an operation event triggered by an operation of the user for registering a record of the state information into a database to be displayed corresponding to the received operation event;
a state information display controlling section to monitor the record of the state information registered in the database for determining the record of the state information to be displayed; and
a state information displaying section to display the determined record of the state information on a display screen,
wherein at least one record of the state information is displayed on the display screen at a predetermined timing.
